# DEMANDE DE BREVET EUROPEEN

(11) **EP 1 413 198 A1**
(43) Date de publication de la demande: **28.04.2004**
(21) Numéro de dépôt: 02356209.3
(22) Date de dépôt: 24.10.2002
(51) Int. Cl.: A01N 43/54

(54) **Utilisation du pyrimethanil sur des pathogènes résistants**

(71) Demandeur: Bayer CropScience SA, 69266 Lyon Cedex 09 (FR)
(72) Inventeur: Duvert, Patrice, 69004 Lyon (FR); Arroyo Herrera, Teresa Urbanizacion Trejos Monteal, Plaza Colonial San Jose,Costa Rica (CR)
(74) Mandataire: Mérigeault, Shona

(57) **Abrégé**

La présente invention concerne une utilisation particulière du pyrimethanil pour la lutte contre les cercosporioses, touchant notamment les cultures bananières, et qui présentent un certain degré de résistance aux composés fongicides inhibiteurs de la synthèse des stérols des champignons à l'origine de ces maladies, notamment les composés de type triazole.

## Description

La présente invention concerne une utilisation particulière du pyrimethanil pour la lutte contre les cercosporioses, touchant notamment les cultures bananières, et qui présentent un certain degré de résistance aux composés fongicides inhibiteurs de la synthèse des stérols des champignons à l'origine de ces maladies, notamment les composés de type triazole.

Les cercosporioses touchant les cultures bananières représentent le problème majeur de ces cultures. En effet, l'impact négatif de ces maladies sur ces cultures se situe bien au-delà des problèmes liés à d'autres maladies mais également liés à d'autres nuisibles, notamment les ravages dus aux insectes ou aux mauvaises herbes.

Les conséquences de ces maladies sont généralement une forte réduction quantitative de la production de ces cultures mais également une diminution de la qualité des récoltes. Ainsi, ces maladies ont un impact négatif sur le rendement mais également sur les qualités organoleptiques des fruits récoltés.

Les conditions climatiques particulières présentes dans les régions de production habituelles de ces cultures que sont une forte humidité combinée à des températures élevées, conduisent à un développement constant et intense de ces maladies.

De ce fait, les plantes cultivées sont soumises à une très forte pression des maladies nécessitant une utilisation intensive des moyens de lutte anti-fongiques efficaces sur les champignons à l'origine de ces maladies.

Le corollaire de cette très large utilisation de composés fongicides sur ces plantes et la constance de la forte pression de ces maladies sur ces mêmes plantes conduit fréquemment au développement de phénomènes de résistance à ces composés fongicides de la part des organismes pathogènes responsables de ces cercosporioses.

De tels phénomènes de résistance sont bien connus de l'homme du métier et ont pu conduire à une limitation du nombre de traitements avec certains agents fongicides. On peut notamment citer les composés fongicides de type benzimidazole ou les composés inhibiteurs de la synthèse des stérols chez ces champignons pathogènes, et plus récemment les composés inhibiteurs de la respiration mitochondriale, ces composés sont habituellement désignés par l'abréviation Qoi.

De tels phénomènes de résistances ont pu aussi conduire à un arrêt de l'utilisation de certains de ces produits suite à leur absence totale d'efficacité pour la protection de ces cultures contre ces maladies.

Parmi les composés sujets à de tels phénomènes de résistances, les composés inhibiteurs de la synthèse des stérols conduisent à un développement progressif de ces phénomènes en étroite relation avec le nombre d'applications annuelles de ces composés sur les cultures traitées et avec la pression de la maladie au champ. Parmi ces composés, les plus répandus sont les composés de type triazole tels que bitertanol, difenoconazole, propiconazole ou encore le tebuconazole.

De manière habituelle, un tel développement de ces phénomènes aboutit à une érosion progressive de l'efficacité de ces composés fongicides connus.

En présence de tels phénomènes de résistance, l'utilisateur est amené voire contraint de se tourner vers des produits fongicides dont le mode d'action sur les champignons pathogènes diffère de celui des composés sujets à ces résistances.

Une solution peut être d'employer des composés ayant un mode d'action inédit et n'agissant pas au niveau de la synthèse des stérols de ces champignons. Dans ce cas, l'efficacité attendue tant sur les champignons sensibles que résistants aux composés inhibiteurs de la synthèse des stérols est comparable.

Dans un tel cas, l'efficacité d'un composé inhibiteur de la synthèse des stérols sur les champignons résistants sera amoindrie voire insuffisante en comparaison avec son efficacité sur des champignons sensibles.

Par contre, un composé ayant un mode d'action différent ne montrera pas de différence d'efficacité sur ces différents champignons.

En présence de tels phénomènes de résistances aux composés inhibiteurs de la synthèse des stérols et de manière tout a fait surprenante et inédite, il a été découvert que le pyrimethanil possède une efficacité significativement supérieure lorsqu'il s'agit de lutter contre des champignons ayant développé une telle résistance. Une telle efficacité d'un composé fongicide qui soit supérieure sur des souches résistantes à certains composés en comparaison avec l'efficacité de ce même composé sur des souches sensibles à ces composés n'a jamais été rapportée. Il s'agit là d'un fait unique, inédit et tout à fait surprenant.

Ainsi un premier aspect de la présente invention concerne une utilisation du pyrimethanil pour la lutte contre les champignons responsables des cercosporioses des cultures et résistant aux composés inhibiteurs de la synthèse des stérols.

En effet, l'utilisation de ce composé sur des champignons ayant développé de telles résistances s'est montrée supérieure à l'efficacité habituelle du pyrimethanil sur de tels champignons sensibles aux composés inhibiteurs de la synthèse des stérols. De ce fait, l'utilisation du pyrimethanil dans des conditions de résistances aux composés inhibiteurs de la synthèse des stérols peut permettre de circonscrire voire de faire reculer ces phénomènes de résistance à ces composés. Un tel effet d'un composé fongicide est également unique.

Cette utilisation inédite du pyrimethanil en vue de circonscrire voire de faire reculer ces phénomènes de résistance de champignons pathogènes responsables des cercosporioses des plantes aux composés inhibiteurs de la synthèse des stérols constitue un autre aspect de cette invention.

L'une ou l'autre de ces utilisations du pyrimethanil selon l'invention est indifféremment qualifiée d'utilisation selon l'invention. Toutes deux permettent de protéger les plantes, et en particulier les cultures, contre ces maladies.

Comme composés inhibiteurs de la synthèse des stérols susceptibles de développer des phénomènes de résistance chez les champignons pathogènes responsables des cercosporioses, on peut citer de manière non-exhaustive les composés de type triazole.

Parmi ces composés, l'utilisation selon l'invention est particulièrement efficace pour lutter contre les pathogènes ayant développé une résistance à l'un ou l'autre des composés suivants: bitertanol, difenoconazole, le propiconazole, tebuconazole.

Dans le cadre de l'utilisation du pyrimethanil selon l'invention, les quantités de pyrimethanil habituellement mises en oeuvre sont conformes aux quantités usuelles de ce composé fongicide pour la lutte contre les cercosporioses. Ainsi, des quantités allant de 20 à 800g/ha, de préférence allant de 150 à 500g/ha, se sont montrées particulièrement efficaces.

L'utilisation selon l'invention est particulièrement avantageuse pour la lutte contre les agents pathogènes responsables des cercosporioses, en particulier *Mycosphaerella fijiensis* et *Mycosphaerella musicola*, de préférence *Mycosphaerella fijiensis.*

L'utilisation selon l'invention s'est montrée particulièrement avantageuse pour la protection des cultures bananières, en particulier les cultures de bananes plantains ou de bananes douces, de préférence les cultures de bananes douces. Toutefois, cette utilisation pour la protection d'autres cultures fait également partie de l'invention.

L'invention est illustrée par l'exemple suivant qui ne doit en aucun cas être considéré comme limitatif de l'invention.

### Exemple de traitement M. fijiensis ascospores

Le présent exemple a pour but de comparer la sensibilité au pyrimethanil de souches dites résistantes aux composés inhibiteurs de la synthèse des stérols (ici, le propiconazole) (échantillons 1 et 2) avec la sensibilité au pyrimethanil de souches dites naturelles ou non résistantes (échantillons 3 à 5).

### Préparation des échantillons de M. fijiensis ascospores

Des tissus séchés de bananes nécrosées et brûlées collectés à différents endroits du Costa Rica sont incubés dans des sacs en plastique avec un papier humidifié. L'incubation dure 48 heures et s'effectue à température ambiante. Après la période d'incubation, les échantillons sont retirés des sacs en plastique et découpés en petits morceaux de 1 à 2 cm. Des morceaux d'origine diverses sont ainsi préparées. 6 morceaux d'origine différente sont ensuite attachés à du papier blanc. Le papier auquel ont été attachés les différents échantillons est trempé pendant 5 minutes dans de l'eau distillé puis immédiatement placé dans une boite de pétri contenant de l'agar à 2% et du pyrimethanil à différentes concentrations.

### Détermination de la sensibilité des souches au traitement par le pyrimethanil

La sensibilité de 5 échantillons d'ascospore provenant de lieux différents et préparés comme indiqué précédemment, a été testé en utilisant méthode dite de la "longueur du tube germinatif". 5 concentrations en pyrimethanil ont été testés deux fois: 0, 1, 10, 30 et 100 µg.ml⁻¹. 60 ascospores ont été utilisés pour les tests à 10 et 30µg.ml⁻¹ et 30 ascospores ont été utilisés pour les autres concentrations. Les concentrations causant une réduction de 50% de la longueur du tube germinatif (également appelées EC₅₀) ont été déterminées par calcul statistique sur la base de données obtenues.

Les résultats sont regroupés dans le tableau 1 suivant :

**Tableau 1**

| **Référence de l'échantillon** | **EC50 (en ppm) par traitement au pyrimethanil** | **EC50 (en ppm) par traitement au propiconazole** |
|---|---|---|
| Echantillon 1 | 15 | > 1 |
| Echantillon 2 | 4 | 0,85 |
| Echantillon 3 | 32 | 0,027 |
| Echantillon 4 | 60 | 0,010 |
| Echantillon 5 | 42 | 0,018 |

Il apparaît que la EC50 par traitement au pyrimethanil est moins importante (efficacité accrue) lorsque la EC50 par traitement au propiconazole est plus élevée (phénomène de résistance).

Ces résultats démontrent que l'utilisation du pyrimethanil sur des champignons ayant développé une résistance aux composés inhibiteurs de la synthèse des stérols s'est montrée plus efficace que l'utilisation habituelle du pyrimethanil sur des champignons sensibles aux composés inhibiteurs de la synthèse des stérols.

## Revendications

1. Utilisation du pyrimethanil pour la lutte contre les champignons responsables des cercosporioses des cultures et résistant aux composés inhibiteurs de la synthèse des stérols.

2. Utilisation du pyrimethanil en vue de circonscrire voire de faire reculer les phénomènes de résistance de champignons pathogènes responsables des cercosporioses des plantes aux composés inhibiteurs de la synthèse des stérols.

3. Utilisation selon l'une ou l'autre des revendications 1 et 2 de quantités de pyrimethanil allant de 20 à 800g/ha.

4. Utilisation selon la revendication 3 de quantités de pyrimethanil allant de 150 à 500g/ha.

5. Utilisation selon l'une ou l'autre des revendications 1 à 4 pour la protection des cultures bananières.

6. Utilisation selon la revendication 5 pour la protection des cultures de bananes douces.

7. Utilisation selon la revendication 5 pour la protection des cultures de bananes plantains.

8. Utilisation selon l'une ou l'autre des revendications 1 à 7 contre *Mycosphaerella fijiensis.*

9. Utilisation selon l'une ou l'autre des revendications 1 à 7 contre *Mycosphaerella musicola*.
